# EUROPEAN PATENT SPECIFICATION

(11) **EP 0 443 183 B1**
(45) Date of publication and mention of the grant of the patent: **12.06.1996**
(21) Application number: 90125034.0
(22) Date of filing: 20.12.1990
(51) Int. Cl.: G06K 15/02, G06K 15/12

(54) **Method and system for the storage and access of laser printer typeface character data**
Verfahren und System zur Aufzeichnung von und zum Zugang zu Schrifttypenzeichendaten eines Laserdruckers
Procédé et système de mise en mémoire et d'accès à des données de caractères typographiques d'une imprimante à laser

(30) Priority: 23.02.1990 US 484151
(43) Date of publication of application: 28.08.1991
(73) Proprietor: Hewlett-Packard Company, Palo Alto, California 94304 (US)
(72) Inventor: Lahey, Seana L., Boise, Idaho 83702 (US); Blackbird, Charles J., Boise, Idaho 83704 (US)
(74) Representative: Baillie, Iain Cameron

(56) References cited:
- EP-A- 0 027 566
- EP-A- 0 335 211
- FR-A- 2 392 813
- US-A- 4 429 306
- PATENT ABSTRACTS OF JAPAN, vol. 11, no. 151 (P-576), 16th May 1987; & JP-A-61 285 573 (RICOH CO.) 16-12-1986

## Description

### Technical Field

This invention relates generally to electrophotographic or laser printers and more particularly to a laser printer having a large number of scalable typefaces available from a given amount of printer memory. These laser printers are manufacturable at a relatively low cost and they represent a significant price/performance breakthrough in the art and technology of laser printing.

### Background Art

Electrophotographic or laser printers have been commercially available for several years and are known to provide some of the highest forms of print quality on the printed media in all of the fields of both impact and non-impact printing. An example of these laser printers is the Hewlett-Packard LaserJet Series II printers which are described in the LaserJet Series II User's Manual, part number 33440-90901 available from the Hewlett-Packard Company (HP) of Palo Alto, California. These Hewlett-Packard LaserJet Series II printers include, among other things, means for receiving user input printer language commands via a computer interface cable, means for interpreting these user input printer language commands such as the Hewlett-Packard Printer Command Language (PCL), and means connected to these interpreting means for accessing the appropriate digital data from printer memory. This digital data is accessed and processed in order to obtain corresponding printable character data representative of a particular size, treatment (e.g., style and stroke weight), and print orientation. This type of character data is also known in the art as bitmap data. This character data is in turn used for controlling a laser beam of the lacer printer, and the laser beam in turn is operative to write a printed image on a photoconductive drum of the laser printer. The printed image is then transferred from the photoconductive drum to an adjacent print media as is well known in this art.

As used herein and as is generally understood in this art, the term "typeface" is defined as a group of characters that have similar design features. Often a typeface will be available in several treatments, e.g., bold, italic, etcetera. Within the HP LaserJet Series II and all other HP PCL printers, characters within a typeface are accessed by a user through character sets. The term "character set" as used herein and as is generally understood by those skilled in the art is defined as a grouping of characters, generally containing many less characters than all characters designed for typeface, and arranged with a specific printer application in mind. For example, the legal and math character sets are generally designed to support legal and scientific applications, and they contain only those characters used in the particular application (e.g., there is no square root character in the legal character set).

Whereas these HP LaserJet Series II printers have been highly regarded and widely accepted by consumers throughout the world as the latest in state-of-the-art laser printing technology, these laser printers nonetheless have an upper limit on the number of characters in unique character sets and typeface treatments which are available from a given amount of memory storage capacity of the printer. This memory for the HP LaserJet Series II printer is read-only-memory (ROM).

One reason for this upper limit on the memory for character storage capability of the HP LaserJet Series II printer is that this printer was designed so that each character of each typeface in each treatment and for each size was stored separately in memory and represented with unique digital data (i.e., bitmap data) therein. This was true even though certain characters are common across multiple typefaces and typeface treatments. This latter design characteristic of the HP LaserJet Series II printer obviously required a significant duplication of memory storage for identical characters in the different available typeface treatments.

The above duplication of ROM memory storage is undesirable for a number of reasons. Firstly, the requirement for additional ROM to add character storage capability to a laser printer can mean an additional ROM cost of between $9.00 and $12.00 per ROM semiconductor chip. When this additional cost is multiplied by a standard manufacturing cost multiplier of typically between 3 and 4, this can mean adding as much as $50.00 to the consumer cost in an extremely competitive marketplace.

Secondly, the requirement for adding more ROM memory capability to a laser printer means the addition of more pins on the printed circuit board which supports the ROMs, and this in turn means lowering printer reliability. Thus, the high desirability of minimizing memory storage (ROM) requirements in laser printers while simultaneously maximizing the character storage capability of the printer is manifest.

Another approach attempting to deal with memory storage associated with character generation is described in U.S. Patent 4,429,306 issued to Macauley et al, entitled "Addressing System for a Multiple Language Character Generator". Symbols which are special to a particular language being displayed are stored in one of a plurality of special symbol areas. The proper special symbol area is selected by comparing high order bits of a display character code with compare bits to determine whether a different special symbol area is to be substituted for a default symbol area. If the compare bits indicate that a different special symbol area is to be substituted, the high order bits of the display character code are replaced by substitution bits to access the special symbol area unique to the language being displayed. Common symbols are stored only once. The features of the preamble of the independent claims are disclosed in this document.

### Disclosure of Invention

Accordingly, the general purpose and principal object of the present invention is to maximize the number of available printable characters for a laser printer for a given amount of printer memory storage capacity, such as in a given number of semiconductor read-only-memories on a printer's controller board or in plug-in type cartridges therefor.

To accomplish this purpose the present invention provides a method and apparatus as set forth independent claims 1 and 9 for processing information or data between an input/output data stream for a laser printer and an output print control mechanism therefor which includes storing in memory a plurality cf character set mappings defined as "recipes" for creating character sets for a chosen application or language from the characters stored in the ROM memory. The characters stored in memory have numbers associated with them that are independent of particular characters sets and are organized into several categories including those characters specific to a given typeface and treatment (typeface sensitive), those characters whose design and appearance varies among several classes and/or treatments of typefaces but are common to more than one typeface (limited sensitivity), and finally those characters whose appearance does not vary between typefaces (universal), and are therefore in every typeface. A character set map is used to determine the number of the character specified by a user. The typeface sensitive characters group is the largest and most commonly used, and is therefore searched first for a character corresponding to the one the user has specified. If no match is found, the limited sensitivity characters are searched next. Again, if no match is found, the universal characters are searched. Once the character data is located, the character is scaled to a desired height and width, and this process may be repeated several times for characters that are composites of several pieces. The novel combination of: (1) the character set mapping and multiple use of limited sensitivity and universal characters and (2) the subsequent scaling and character composition thereof maximizes the character storage capability for the printer for a given amount of printer memory available.

This invention provides a new and improved laser printer of the type described whose manufacturing and consumer costs have been minimized, while simultaneously maximizing printer reliability.

Another feature of this invention is the provision of character scaling means connected to receive character data stored in printer memory and operative for scaling a character selected from one of the memories or memory sites to a desired height and width, thereby providing variable size character input data for driving a printing mechanism.

Another feature of this invention is the provision of a method and apparatus of the type described which includes means for dividing the characters for printing into a plurality of character groupings or collections which are based upon a need for character variability. These groupings or collections include typeface sensitive characters, limited sensitivity characters, and universal characters which are described below.

The above features and various other advantages of this invention will become better understood and appreciated with reference to the following descriptions of the accompanying drawings.

### Brief Description of the Drawings

Figure 1 is a functional block diagram of the laser printer and control system therefor according to the present invention.

Figure 2 is a functional block diagram of one example of the organization of the typeface character data and memory interface shown in Figure 1.

### Description of the Preferred Embodiment

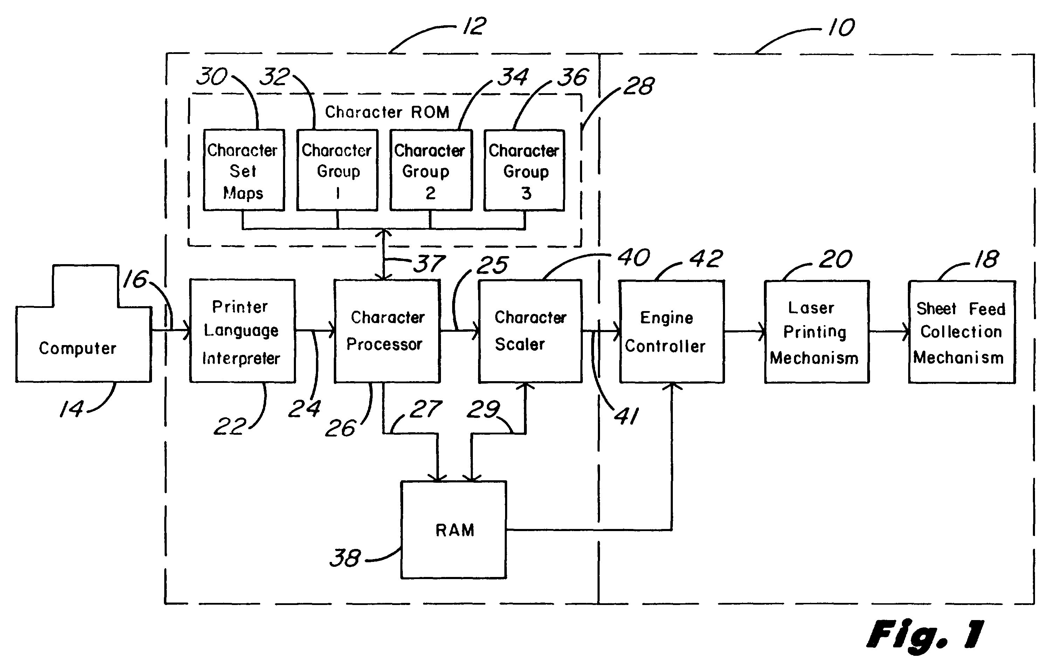

Referring now to Figure 1, the new and improved laser printer 10 according to the present invention includes therein a novel laser printer control system 12 which is connected to receive its input command data from an operator at a computer 14. The computer 14 is connected to the control system 12 by way of a cable 16, and the hardcopy output of the laser printer is derived from a sheet feed and collection mechanism 18. As is known in the art, the hardcopy output at the media collection stage 18 is produced by a laser printer mechanism 20 which includes, among other things, means for controlling a laser beam which is used to write a printed image on a photoconductive drum. This printed image is transferred from the photoconductive drum to an adjacent print media (neither shown) as is also well known in the art. In the embodiment shown in Figure 1, the printed media will normally be cut sheets of laser printed output hardcopy available at stage 18.

The input command data received via cable 16 is received and interpreted by a printer language interpretation program 22 located on the printer controller board (not shown). This program 22 records the commands that specify the user's desired character set, size, treatment, and typeface. When this program subsequently receives commands to print particular characters, it generates a command signal on line 24 which is applied to a character processor 26. The character processor 26 in turn executes a character processing program that makes the appropriate electrical connections via line 37 to read the ROMs 28 containing scalable character data. The ROM containing the character set maps 30 is accessed first. The character set map corresponding to the user requested character set is located by way of a linear search. Once the map is located, the memory location within the map corresponding to the character set number of the character that the user requested is accessed; therein is stored a number that corresponds to the actual character requested. The character processing program then searches the Group 1 memory 32 containing the typefaces sensitive characters of the requested typeface for the character with the appropriate number. The typeface sensitive characters in Group 1 memory 32 are searched first because there is the greatest probability that the character will be found in this group.

If the requested character is not located among the typeface sensitive characters in the Group 1 memory 32, the appropriate limited sensitivity characters in Group 2 memory 34 are searched. If a requested character is still not located, the universal characters in Group 3 memory 36 are searched. Once the desired character is located, the data describing this character is copied by the character processor and applied via line 27 to a temporary location in a random-access-memory (RAM) 38. A character scaling program is then executed in a character scaler stage 40 by a signal applied via line 25 from the character processor 26. This program reads the character data stored in the RAM 38 via line 29 and generates a printable character that corresponds to the user requested character size. This printable character is then stored in RAM 38 for latter access by a program in an engine controller 42. The engine controller program in stage 42 then reads the RAM 38 via a signal on line 41 and sends the printable character data to the laser printing mechanism 20. The laser printing mechanism 20 places the character image on the photoconductive drum which is subsequently transferred to a sheet of paper, a process well known in the art.

As will be readily appreciated by those skilled in the art, this unique and elegantly simple division of characters which are grouped in the three memory locations 32, 34, and 36 and which are serially addressed and interrogated as described above using character set maps 30 has the effect of significantly reducing the overall amount of memory required to generate a given number of characters in a laser printer. Or conversely, given a certain upper limit on laser printer memory as dictated, for example, by printer cost and price limitations, the laser printer according to the present invention is constructed to contain and provide a heretofore unavailable maximum amount of character data from which a heretofore unavailable maximum number of unique printed images may be produced.

When used in combination with the above novel character storage and access method and system, the character scaler 40 provides an additional amount of memory saving which is made possible by its ability to scale every individual character to a desired height and width. Laser printers in the prior art, such as the Hewlett-Packard LaserJet Series II printer, have traditionally used separate memory to store the same character of a different size, and this size variability is now provided by the character scaler 40.

The printer command language interpreter 22 per se and the concept of character scaling per se are not new and are not individually claimed as new herein. The particular language used by the interpreter 22 is well known in this art as the HP PCL Printer Command Language, and a further detailed discussion of such language may be found in the LaserJet Series II Technical Reference Manual, HP part number 33440-90905. Similarly, character scaling has been used in various applications in the past to scale characters to a selected height and width. Typesetter controllers and typesetting proofing devices are examples of printing apparatus which have been previously equipped with a character scaling capability. One such typesetter controller device is sold by Compugraphic Division of Agfa Corporation under the registered tradename of GENICS. However, it will be understood and appreciated from the description herein that the use of character scaling in combination with the character storage format and access techniques represents a novel method combination and a novel system combination useful in maximizing the total character output printing capability for a given amount of printer memory.

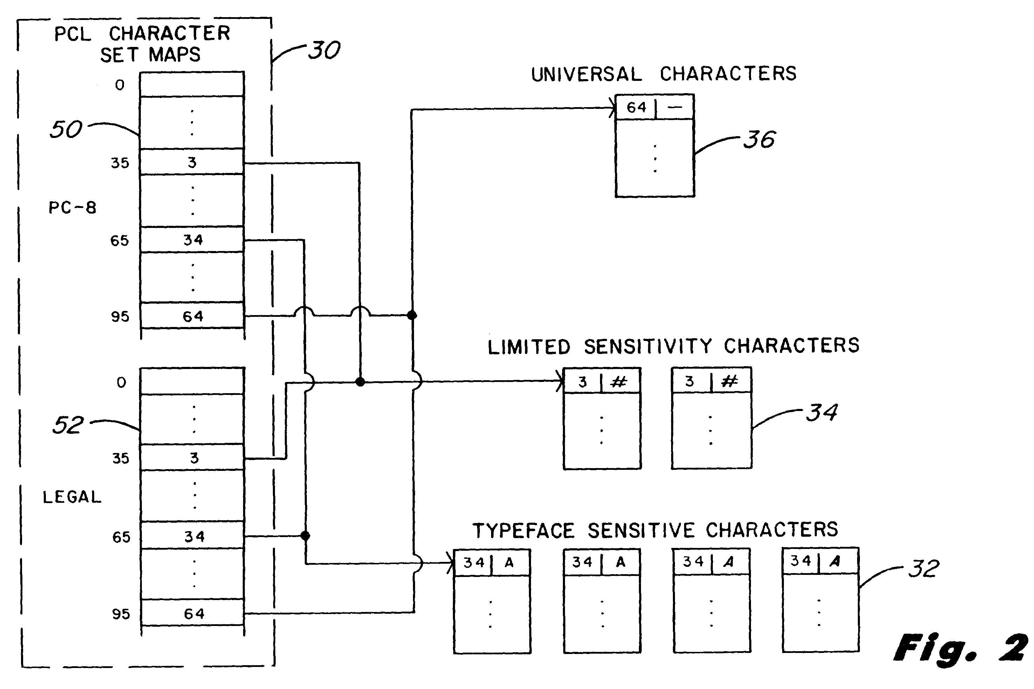

Referring now to Figure 2, the PCL character set maps 30 include for purposes of illustration a map 50 which is identified as "PC-8" and a map 52 which is identified as "Legal". These application-specific maps include therein the character set numbers 0-95 and the character look-up numbers, for example, (3), (34), and (64). These character look-up numbers (3), (34), and (64) are connected as shown, respectively, to the ROMs 34, 32, and 36 which store the Group 2, Group 1, and Group 3 memories, respectively. In Figure 2, the character processing program in the character processor 26 in Figure 1 accesses a PCL Printer Command Language character set map 36 that corresponds to the character set requested by the user. These maps contain the look-up number of each of the characters in the selected character set. This look-up number is used when searching the Group 1, 2, and 3 memories 32, 34, and 36.

As an example of operation, a so called "_" or underscore character may be desirable for use within multiple character sets; however, the underscore character does not vary in appearance across multiple typeface treatments. Therefore, the same underscore character can be used with every one of a large variety of character sets such as those described by the character set maps 30. The underscore character is therefore defined herein as a "universal" character, since it may be used universally among many different typefaces and typeface treatments.

In accordance with the present invention, if a user selects the PC-8 character set followed by typing an underscore character "_" from the keyboard of his or her computer and then requests that this character be printed, the printer language interpreter program in stage 22 in Figure 1 then requests that the character processing program in the character processor 26 (Figure 1) search the ROM 30 for the PC-8 character set map 50. Simultaneously, the character set number location 95 in Figure 2 is accessed to identify the underscore character's look up number (64). The character processing program in the character processor 26 then searches the Group 1 characters in the ROM 32 for character number 64. Since the underscore character is not in Group 1, the next Group 2 is searched in the ROM 34. Finally, the character Group 3 in the ROM 36 is searched and the underscore character is located. This character data is then copied to the RAM 38 and the character scaler 40 (Figure 1) uses this data to generate an image of the appropriate size. Therefore, it will be appreciated by those skilled in the art that only a single underscore character now need be stored in ROM, and that duplicate storage of this universal character is totally eliminated in accordance with the present invention.

If a typeface sensitive character such as the letter "A" is selected from the keyboard and printed in either the PC-8 or Legal character sets 30, the corresponding character look-up number (34) will be used to locate the "A" in the requested typeface and treatment. Again, the search begins with the memory in the ROM 32. In this case, the requested typeface sensitive character is found in this first search location. Since "A" is more commonly used than "_", the overall access speed of the system is enhanced by virtue of the order in which the three character groups in ROM 32, 34, and 36 are searched.

As a final example, assume that a limited sensitivity character such as the pound sign"#" or number abbreviation sign "#" is selected for printing. There is a need only for a restricted number of different treatments of this character, (medium and bold are shown), as compared to the four different treatments of the typeface "A" shown. This represents a savings in memory storage equivalent to the size of two pound sign characters.

It should be apparent from the above description of Figure 2 that character set maps 30 are only two of a much larger number of character set maps which may be used in accordance with the present invention. Similarly, the universal characters, limited sensitivity characters, and typeface sensitive characters used for example and illustration in Figure 2 are representative of a larger number of characters that may be added to the above three storage groupings and made available in accordance with the novel teachings of the present invention.

Various other modifications may be made in and to the above described embodiments without departing from the scope of this invention. For example, if required for certain printing applications, the above three character groupings can be either expanded to a larger number or reduced to two. Furthermore, the present invention is not limited to laser printers and may be used for memory saving purposes in other types of printers such as impact printers, thermal printers, ink jet printers and the like. Accordingly, these types of variations as well as design variations and changes of hardware and software for the systems described above are within the scope of our appended claims.

## Claims

1. An apparatus (12) for selecting for printing a character from data stored in a memory (28) of a printer (10) wherein:
a plurality of different character groupings are stored in a corresponding plurality of different memory storage sites (32,34,36), and
characterized by means (30) connected to said memory (28) for accessing said different memory storage sites (32,34,36) beginning with a memory storage site (32) storing the grouping of characters which are most commonly used across different typefaces and then addressing in sequence the remaining memory storage sites (34,36) until a selected character is identified in one of said memory storage sites (32,34,36).

2. The apparatus of claim 1 wherein the means connected to said memory includes:
means for searching for a chosen character by accessing a first memory site (32) in said memory in which the most commonly used characters are stored and then printing said chosen character if it is stored in said first memory site, and
means for further accessing a second memory site (34) therein if said chosen character is not stored in said first memory site, whereby characters grouped in said second memory site are less commonly used over multiple typefaces and typeface treatments than those characters stored in said first memory site, thereby minimizing memory and data storage requirements.

3. The apparatus of claim 2 further including means (40) connected to said searching means for scaling a character selected from one of said memory sites (28) to a desired height and width to provide variable size character input data for driving a printer (10).

4. The apparatus of claims 2 or 3 further including means (30) connected to said memory (28) for accessing a third memory site (36) therein in which other characters are stored which are less commonly used than those characters stored in said second memory site (34).

5. The apparatus of claim 4 further including means (32,34,36) within said storing memory (28) for separately storing the groupings of typeface sensitive characters, limited sensitivity characters, and universal characters in different memory sites and accessible for selective character selection during the operation of said printer (10).

6. The apparatus of claims 4 or 5 further including character set map selection means (30) within said memory (28) for selectively accessing one of said plurality of memory storage sites (32,34,36) therein.

7. The apparatus of claim 2 wherein said memory storage sites (32,34,36) are read-only memory components (28).

8. The apparatus of claim 7 wherein said read-only memory components include, respectively, a read-only memory device for storing (Figure 2) typeface-sensitive characters, a read-only memory device for storing limited sensitivity characters and a read-only memory device for storing universal characters.

9. A method of selecting characters for printing from data stored in a memory (28) of a printer (10) characterized by the steps of:
storing in a plurality of memory sites (32,34,36) a corresponding plurality of character groupings or collections based upon the typeface dependent appearance of the characters therein,
searching for a chosen character by accessing first a memory site (32) in which the most commonly used characters are stored and then printing said chosen character if it is stored in said first memory site, and if necessary to locate said chosen character, then subsequently
accessing a second memory site (34) in which characters are grouped which are less commonly used than the characters stored in said first memory site, whereby said printer memory and data storage requirements are minimized.

10. The method of claim 9 which further includes the step of scaling (40) a character selected from one of said memory sites (28) to a desired height and width to provide variable size character input data for driving a printer (10).

11. The method of claims 9 or 10 which further includes accessing a third memory site (36) in which characters are grouped which are even less commonly used than those characters stored in said second memory site (34).

12. The method of any one of claims 9 - 11 which further includes storing the groupings (Figure 2) of typeface sensitive characters, limited sensitivity characters, and universal characters in different memory sites and being accessible therein for character selection.

13. The method of claim 12 which further includes dividing (Figure 2) a list of characters and/or portions of characters into a plurality of character groupings or collections (32,34,36) based on their individual uniqueness across multiple typefaces and typeface treatments.

## Patentansprüche

1. Eine Vorrichtung (12) zum Auswählen zum Drucken eines Zeichens aus Daten, die in einem Speicher (28) eines Druckers (10) gespeichert sind,
bei der eine Mehrzahl von unterschiedlichen Zeichengruppierungen in einer entsprechenden Mehrzahl von unterschiedlichen Speicherspeicherungsstellen (32, 34, 36) gespeichert ist, und
gekennzeichnet durch eine mit dem Speicher (28) verbundene Einrichtung (30) zum Zugreifen auf die verschiedenen Speicherspeicherungsstellen (32, 34, 36), wobei dieselbe mit einer Speicherspeicherungsstelle (32) beginnt, die die Gruppierung von Zeichen speichert, welche unter verschiedenen Schriftbildern am meisten verwendet werden, und dann die restlichen Speicherspeicherungsstellen (34, 36) sequentiell adressiert, bis ein ausgewähltes Zeichen in einer der Speicherspeicherungsstellen (32, 34, 36) identifiziert ist.

2. Die Vorrichtung gemäß Anspruch 1, bei der die mit dem Speicher verbundene Einrichtung folgende Merkmale aufweist:
eine Einrichtung zum Suchen eines ausgewählten Zeichens durch Zugreifen auf eine erste Speicherstelle (32) in dem Speicher, in der die am häufigsten verwendeten Zeichen gespeichert sind, und dann Drucken des ausgewählten Zeichens, wenn es in der ersten Speicherstelle gespeichert ist; und
eine Einrichtung zum weiteren Zugreifen auf eine zweite Speicherstelle (34) in demselben, wenn das ausgewählte Zeichen nicht in der ersten Speicherstelle gespeichert ist, wodurch Zeichen, die in der zweiten Speicherstelle gruppiert sind, weniger häufig als diese Zeichen, die in der ersten Speicherstelle gespeichert sind, bei Vielfachschriftbildern und Schriftbildbehandlungen verwendet werden, wodurch Speicher- und Datenspeicherungsanforderungen minimiert werden.

3. Die Vorrichtung gemäß Anspruch 2, die ferner eine Einrichtung (40) aufweist, die mit der Sucheinrichtung verbunden ist, zum Skalieren eines Zeichens, das aus einer der Speicherstellen (28) ausgewählt ist, auf eine gewünschte Höhe und Breite, um Eingabedaten für Zeichen variabler Größe zum Treiben eines Druckers (10) zu schaffen.

4. Die Vorrichtung gemäß Anspruch 2 oder 3, die ferner eine Einrichtung (30), die mit dem Speicher (28) verbunden ist, zum Zugreifen auf eine dritte Speicherstelle (36) in demselben aufweist, in der weitere Zeichen gespeichert sind, welche seltener als die Zeichen, die in der zweiten Speicherstelle (34) gespeichert sind, verwendet werden.

5. Die Vorrichtung gemäß Anspruch 4, die ferner eine Einrichtung (32, 34, 36) innerhalb des Speichers (28) zum getrennten Speichern der Gruppierungen von Schriftbild-empfindlichen Zeichen, von Zeichen mit begrenzter Empfindlichkeit und von Universalzeichen in verschiedenen Speicherstellen aufweist, wobei auf dieselben zur selektiven Zeichenauswahl während des Betriebs des Druckers (10) zugegriffen werden kann.

6. Die Vorrichtung gemäß Anspruch 4 oder 5, die ferner eine Zeicheneinstellungstabellen-Auswahleinrichtung (30) innerhalb des Speichers (28) zum selektiven Zugreifen auf eine der Mehrzahl von Speicherspeicherungsstellen (32, 34, 36) in demselben aufweist.

7. Die Vorrichtung gemäß Anspruch 2, bei der die Speicherspeicherungsstellen (32, 34, 36) Nur-Lese-Speicherkomponenten (28) sind.

8. Die Vorrichtung gemäß Anspruch 7, bei der die Nur-Lese-Speicherkomponenten jeweils ein Nur-Lese-Speichergerät zum Speichern (Fig. 2) von Schriftbild-empfindlichen Zeichen, ein Nur-Lese-Speichergerät zum Speichern von Zeichen mit begrenzter Empfindlichkeit, und ein Nur-Lese-Speichergerät zum Speichern von universellen Zeichen aufweisen.

9. Ein Verfahren zum Auswählen von Zeichen zum Drucken von Daten, die in einem Speicher (28) eines Druckers (10) gespeichert sind, gekennzeichnet durch folgende Schritte:
Speichern in einer Mehrzahl von Speicherstellen (32, 34, 36), eine entsprechende Mehrzahl von Zeichengruppierungen oder Sammlungen basierend auf der Schriftbild-abhängigen Erscheinung der Zeichen in denselben;
Suchen nach einem ausgewählten Zeichen durch Zugreifen auf eine erste Speicherstelle (32), in der die am häufigsten verwendeten Zeichen gespeichert sind, und dann Drucken des ausgewählten Zeichens, wenn es in der ersten Speicherstelle gespeichert ist; und wenn es notwendig ist, um das ausgewählte Zeichen zu lokalisieren, dann anschließendes
Zugreifen auf eine zweite Speicherstelle (34), in der Zeichen gruppiert sind, welche weniger häufig als die in der ersten Speicherstelle gespeicherten Zeichen verwendet werden, wodurch die Druckerspeicher- und Datenspeicherungs-Anforderungen minimiert sind.

10. Das Verfahren gemäß Anspruch 9, welches ferner den Schritt des Skalierens (40) eines Zeichens, das aus einer der Speicherstellen (28) ausgewählt ist, auf eine gewünschte Höhe und Breite aufweist, um Eingabedaten für Zeichen variabler Größe zum Treiben eines Druckers (10) zu schaffen.

11. Das Verfahren gemäß Anspruch 9 oder 10, welches ferner das Zugreifen auf eine dritte Speicherstelle (36) aufweist, in der Zeichen gruppiert sind, welche weniger häufig als die Zeichen, die in der zweiten Speicherstelle (34) gespeichert sind, verwendet werden.

12. Das Verfahren gemäß einem beliebigen der Ansprüche 9 bis 11, welches ferner das Speichern der Gruppierungen (Fig. 2) von Schriftbild-empfindlichen Zeichen, von Zeichen mit begrenzter Empfindlichkeit und von Universalzeichen in verschiedenen Speicherstellen aufweist, wobei zur Zeichenauswahl auf dieselben zugegriffen werden kann.

13. Das Verfahren gemäß Anspruch 12, welches ferner das Aufteilen (Fig. 2) einer Liste von Zeichen und/oder Abschnitten von Zeichen in eine Mehrzahl von Zeichengruppierungen oder Sammlungen (32, 34, 36) basierend auf ihrer individuellen Einzigartigkeit bei Vielfachschriftbildern und Schriftbild-Behandlungen aufweist.

## Revendications

1. Un appareil (12) de sélection destiné à l'impression d'un caractère à partir de données emmagasinées dans une mémoire (28) d'une imprimante (10) dans lequel:
une série de groupements différents de caractères est emmagasinée dans une série correspondante de sites différents (32, 34, 36) de mémoire, et
caractérisé par des moyens (30) connectés à ladite mémoire (28) pour accéder auxdits différents sites (32, 34, 36) d'emmagasinage de mémoire en commençant par un site (32) d'emmagasinage de mémoire qui emmagasine les groupements de caractères qui sont les plus communément utilisés parmi différents styles, de caractère et en adressant ensuite en séquence les sites restants (34, 36) d'emmagasinage de mémoire jusqu'à ce qu'un caractère sélectionné soit identifié dans l'un desdits sites (32, 34, 36) d'emmagasinage de mémoire.

2. L'appareil selon la revendication 1 dans lequel le moyen connecté à ladite mémoire inclut:
un moyen destiné à rechercher un caractère choisi en accédant à un premier site (32) de mémoire de ladite mémoire dans lequel sont emmagasinés les caractères les plus communément utilisés et à imprimer ensuite ledit caractère choisi s'il est emmagasiné dans ledit premier site de mémoire, et
un moyen destiné à accéder ensuite à un deuxième site (34) de mémoire si ledit caractère choisi n'est pas emmagasiné dans ledit premier site de mémoire, des caractères groupés dans ledit deuxième site de mémoire étant moins communément utilisés sur de multiples dessins de caractères et de multiples traitements de dessins de caractères, que les caractères emmagasinés dans le premier site de mémoire, ce qui minimise les exigences de mémoire et d'emmagasinage de données.

3. L'appareil selon la revendication 2 incluant en outre un moyen (40) connecté audit moyen de recherche pour mettre à l'échelle à une hauteur et une largeur souhaitées un caractère sélectionné dans l'un desdits sites (28) de mémoire de manière à produire des données d'entrée de caractères de dimensions variables pour commander une imprimante (10).

4. L'appareil selon la revendication 2 ou 3, comprenant en outre un moyen (30) connecté à ladite mémoire (28) pour accéder à un troisième site (36) de mémoire de celle-ci dans lequel sont emmagasinés d'autres caractères qui sont moins communément utilisés que les caractères emmagasinés dans ledit deuxième site (34) de mémoire.

5. L'appareil selon la revendication 4 qui inclut en outre des moyens (32, 34, 36) inclus à l'intérieur de ladite mémoire (28) pour emmagasiner séparément les groupements de caractères sensibles au style, de caractères à sensibilité limitée et de caractères universels dans des sites de mémoires différents et accessibles pour une sélection sélective de caractères pendant le fonctionnement de ladite imprimante (10).

6. L'appareil selon la revendication 4 ou 5 incluant en outre un moyen de sélection (30) d'une application de jeu de caractères à l'intérieur de ladite mémoire (28) pour accéder sélectivement à l'un des sites de ladite série de sites (32, 34) d'emmagasinage de mémoire qui y sont contenus.

7. L'appareil selon la revendication 2 dans lequel lesdits sites (32, 34, 36) d'emmagasinage en mémoire sont des composants (28) de mémoires mortes.

8. L'appareil selon la revendication 7, dans lequel lesdits composants à mémoires mortes incluent, respectivement, un dispositif de mémoire morte pour emmagasiner (Figure 2) les caractères sensibles au style, un dispositif de mémoire morte pour emmagasiner les caractères à sensibilité limitée et un dispositif de mémoire morte pour emmagasiner des caractères universels.

9. Un procédé de sélection de caractères destinés à l'impression, à partir de données emmagasinées dans une mémoire (28) d'une imprimante (10), caractérisé par les étapes consistant à:
emmagasiner dans une série de sites (32, 34, 36) de mémoire une série correspondante de groupements ou collections de caractères sur la base de la dépendance de l'aspect par rapport au style des caractères qui y sont inclus,
rechercher un caractère choisi en accédant en premier lieu à un site (32) de mémoire dans lequel les caractères communément utilisés sont emmagasinés et imprimer ensuite ledit caractère choisi s'il est emmagasiné dans ledit premier site de mémoire, puis ultérieurement, si nécessaire pour localiser ledit caractère choisi,
accéder à un deuxième site (34) de mémoire dans lequel sont groupés des caractères qui sont moins communément utilisés que les caractères emmagasinés dans ledit premier site de mémoire, grâce à quoi ladite mémoire d'imprimante et ledites d'exigences emmagasinage de données sont minimisés.

10. Le procédé selon la revendication 9, qui inclut en outre l'étape consistant à mettre à l'échelle (40) à une hauteur et une largeur souhaitées un caractère sélectionné dans l'un desdits sites (28) de ladite mémoire de manière à fournir des données d'entrée de caractères de dimensions variables pour commander une imprimante (10).

11. Le procédé selon la revendication 9 ou 10 qui inclut en outre un accès à un troisième site de mémoire dans lequel sont groupés des caractères qui sont encore moins communément utilisés que les caractères emmagasinés dans ledit deuxième site (34) de mémoire.

12. Le procédé selon l'une quelconque des revendications 9 à 11 qui inclut en outre les étapes consistant à emmagasiner les groupements (Figure 2) de caractères sensibles au style, de caractères à sensibilité limitée, de caractères universels dans des sites différents de mémoire de manière qu'ils soient accessibles pour une sélection de caractères.

13. Le procédé selon la revendication 12 qui inclut en outre l'étape consistant à diviser (Figure 2) une liste de caractères et/ou de parties de caractères en une série de groupements ou collections (32, 34, 36) de caractères, sur la base de leur unicité individuelle parmi de multiples styles et de multiples traitements de styles.
